# EUROPEAN PATENT SPECIFICATION

(11) **EP 3 843 328 B1**
(45) Date of publication and mention of the grant of the patent: **03.05.2023**
(21) Application number: 21158668.0
(22) Date of filing: 28.03.2013
(51) Int. Cl.: G06F 21/36, G06F 21/00, H04L 9/40, H04L 9/32

(54) **USER AUTHENTICATION AND AUTHORIZATION USING PERSONAS**
AUTHENTIFIZIERUNG UND AUTORISIERUNG VON BENUTZERN MIT PERSONAS
AUTHENTIFICATION ET AUTORISATION D'UTILISATEUR À L'AIDE DE PERSONAS

(30) Priority: 30.03.2012 US 201213436684
(43) Date of publication of application: 30.06.2021
(62) Divisional of application: 19171334.6
(73) Proprietor: eBay Inc., San Jose, CA 95125 (US)
(72) Inventor: KUMARASWAMY, Subramanian, Cupertino, California 95014 (US)
(74) Representative: Murgitroyd & Company

(56) References cited:
- US-A1- 2003 131 260
- US-A1- 2006 036 951

## Description

### TECHNICAL FIELD

The present application relates generally to the technical field of user information management and, in various embodiments, to systems and methods for authenticating and authorizing a user for web services.

### BACKGROUND

Web services, such as online advertisers, online marketplaces, online payment providers, social network services or other aggregator websites, may deploy technologies to authenticate users, such as receiving user-typed or browser-provided user information (e.g., identifications and passwords) via login web forms provided by the web services. Once the users are properly authenticated, for example, based on determining that the user-typed or browser-provided user information matches stored user information, then the web services may authorize the users for different services based on their identifications. For example, the web services may provide one user with certain services (e.g., functions) while refraining from providing another user with the same services.

US2006/0036951 discloses a method to allow a user to enter different personal data to be used when accessing different remote sites by the user's web browser automatically comparing a user entered URL with URLs for a list of personas to identify if a URL for a persona matches, and if so the person is loaded.

### SUMMARY

The present invention provides a method, a user device and an apparatus for authenticating and authorizing a user for one or more web services.

### BRIEF DESCRIPTION OF THE DRAWINGS

Some embodiments are illustrated by way of example and not limitation in the figures of the accompanying drawings in which:
**FIG. 1** is a block diagram illustrating a system in a network environment for authenticating and authorizing a user using personas, according to various embodiments;
**FIG. 2** is a block diagram illustrating a persona management client module, according to various embodiments;
**FIG. 3** is a block diagram illustrating a persona management server module, according to various embodiments;
**FIG. 4** is a flow diagram illustrating a method at a client for authenticating and authorizing a user for a web service using personas;
**FIG. 5** is a flow diagram illustrating a method at a server for authenticating and authorizing a user for a web service using personas, according to various embodiments; and
**FIG. 6** is a diagrammatic representation of a machine in the example form of a computer system, according to various embodiments.

### DETAILED DESCRIPTION

Example methods and systems to authenticate and authorize a user for web services using personas of the user are described. In the following description, for purposes of explanation, numerous specific details are set forth in order to provide a thorough understanding of example embodiments. It will be evident, however, to a person of ordinary skill in the art that various embodiments of the present invention may be practiced without these specific details.

Conventional authentication and authorization systems can be onerous for users accessing web services (or interchangeably "cloud services") on the Internet for various purposes, such as digital content, e-commerce, entertainment, gaming, social networking, mobile communication, etc. Under the conventional systems, users need to register with the service providers to create their individual accounts that usually include attributes such as user identifications (ID) and passwords. Typically, a user has an identity defined by certain attributes that are assigned to the user by a government or legal entity - first name, last name, social security number, data of birth, place of birth, physical address of residence, or phone number that identify the user with a high degree of assurance to create trust between the user and another entity such as a web service provider.

However, in addition to the legal identity, the user may also exhibit certain behaviors that can be characterized as personas of the user. Each persona may define at least one of a lifestyle, a social behavior, an attitude, an affiliation to communities, a role in a job, or a preference or interest in goods or services, etc. A typical user may exhibit many personas over a period of time, such as a soccer mom, an employee of a commercial enterprise, a social activist, a marathoner, a teacher, a baseball fan, a charity champion, a stamp collector, an eBay shopping enthusiast and fashion follower, or a frequent seller of antique items at eBay, etc. Under the conventional technologies, such personas of the user are at best loosely connected with his user accounts with the web services in the form of attributes captured during registration process with a respective service provider. Accordingly, to receive the web service in different capacities, the user needs to create multiple accounts with the same web service with each account being associated with a different user ID and password. This results in proliferation of multiple accounts and passwords (secret keys) of the user for the same web service, which is hard to manage for the user.

This problem is especially compounded when the users interact with the web services using mobile devices (e.g., cellular phones) that have relatively smaller screens. Accordingly, the users who are registering and interacting with the web services via the mobile devices have to go through a cumbersome process of typing all the data prompted by the web services. Even if some of the required data (e.g., user ID and password) are saved in a browser and automatically provided to the web services by the browser on one click, the users still have to type an URL (uniform resource address) of a respective web service on the browser, or scan through a plurality of saved URL addresses (e.g., visited URLs or favorite URLs) in the browser to find the URL. To reduce the burden of these cumbersome processes to provide a correct URL address and/or user information with the web services, a user may save a shortcut image for a login page of the web service on the screen of his user device (e.g., mobile device) and set the browser to remember the user information associated with that web service.

However, under these approaches, the user may access to the web service only in the same capacity since the web service is associated with the same user attribute information. For example, whenever the user logs in an online marketplace, such as eBay, the user is authenticated based on the same user attribute information and authorized only for the same services regardless of whether he wants to use the online marketplace as a buyer or a seller, or an avid stamp collector or an irregular golf equipment buyer, etc. These problems can aggravate when the user has several accounts with multiple web services, and potentially multiple accounts with each web service to pursue the web service in multiple capacities. In such situations, managing user attributes information can quickly spiral out of control, resulting in user frustration and less engagement with the web services.

To address these problems and others, various embodiments propose systems and methods to authenticate and authorize a user for web services using personas of the user, allowing seamless sign-in and interaction with a respective one of the web services using user gestures on a touch-enabled user device, such as finger, electronic pen or mouse movements.

Personas of a user may be created and stored in a user device (e.g., wireless communication device) that executes a persona management module. Each persona may comprise a number of user attributes that collectively characterize the user in a unique way such that the persona may represent a unique user identity for a web service. These attributes of the persona may comprise user authentication information for the web service, such as an URL of the web service, user ID, password, secret question, secret answer, geo location, age, address, etc. For example, a soccer mom persona or stamp collector persona may carry unique set of attributes that may be attached to a relevant web service account in combination with generic identity attributes, such as a user ID and password, etc.

Each persona may also be mapped and registered to one or more symbols, such as finger gestures, images, icons, letters, numbers or voice key words, to produce a persona symbol. The persona may be activated, for example, by selecting the corresponding persona symbol. For example, a finger gesture (e.g., finger or electronic pen movements) drawing a certain geometric or alphanumerical shape, such as a circle or "S", on a touch screen may indicate activation of the soccer mom persona. In some cases, instead of the figure gesture, a graphical image or icon, or a textual or verbal keyword (or letter or number) that conveys soccer may be assigned to the soccer mom persona as its persona symbol. In such cases, the persona may be activated, for example, by touching and/or moving its corresponding persona symbol on the touch screen, or typing or speaking out the key word (or letter or number).

Each persona may be linked to a certain web service. In such a case, once the persona has been activated, the persona management module may automatically perform one or more operations (or functions) with the web service on behalf of the user, such as registering, signing in (if the user has been previously registered), or transmitting other persona attributes (e.g., geographical location of the user device, or social activities of the user, etc.) or a message (e.g., "share my geo location" or "share my persona attributes," etc.) to the web service via a network (e.g., the Internet). These operations may be context sensitive. For example, when the web service is in the registration context, the persona management module may be configured to populate the registration form with one or more attributes of the persona. Similarly, when the web service is in the login context, the persona management module may be configured to populate the login form with only a subset of the one or more attributes of the persona. In addition to and/or in alternative to the persona being linked to the web service, the persona symbol may be dragged and dropped onto a service symbol on the screen that indicates the web service to activate and/or perform the above described actions at the web service.

The persona management module may comprise a persona management client module and a persona management server module. The persona management client module may be configured to execute on a user device, and the persona management server module may be configured to execute on a server associated with (e.g., providing) the web service or a third party server providing authentication and authorization services to the web service. Web services that support personas, directly or indirectly, may be "persona aware" in that, for example, the persona management client module on the user device may be configured to interact with the persona management server module on the web service provider server or the third party authentication and authorization server, via the network to perform actions on behalf of the user.

Similar to storing a plurality of personas of a user on a user device corresponding to the user, each web service may be configured to allow associating multiple personas with a single user (or user identity) such that each persona is assigned to a different level of authorization for the web service. This allows the web service to provide the same user with different personalized services based on the personas of the user that have been selected and activated on the user device.

In various embodiments, a selection of a persona symbol of a user from a plurality of stored persona symbols may be received via a user device corresponding to the user. Each persona symbol may comprise at least one symbol and correspond to a respective persona of a plurality of personas. Each persona may indicate a unique identity of the user for one or more web services and comprise one or more attributes populated with at least one portion of user attribute information. The persona corresponding to the persona symbol being selected may be activated. At least one attribute of the one or more attributes of the persona being activated may be transmitted to the one or more web services over a network. Various embodiments that incorporate these mechanisms are described below in more detail.

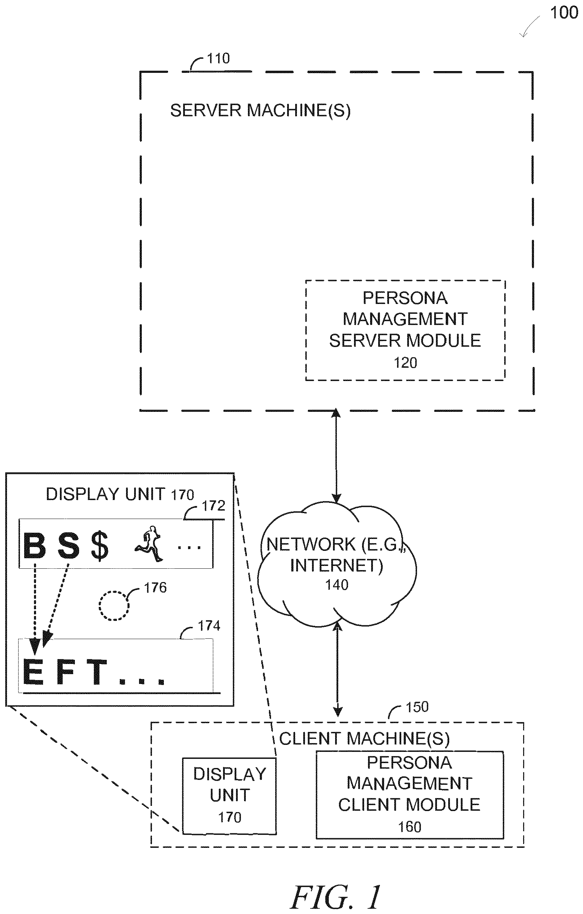

**FIG. 1** shows a block diagram illustrating a system 100 in a network environment for user authentication and authorization using personas, according to various embodiments. The system 100 may include one or more server machines 110 connected through a network (e.g., the Internet) 140 to one or more client machines 150, such as personal computers (PCs), notebooks, netbooks, tablet PCs, servers, cell phones (e.g., smart phones), personal digital assistants (PDAs), televisions (TVs) or set top boxes, etc.

The server machines 110 may comprise a persona management server module 120 and one or more web service platforms (not shown), such as a network-based trading platform. In various embodiments, the network-based trading platform may provide one or more marketplace applications, payment applications, and other resources. The marketplace applications may provide a number of marketplace functions and services to users that access the marketplace. The payment applications, likewise, may provide a number of payment services and functions to users. The network-based trading platform may display various items listed on the trading platform.

The embodiments discussed in this specification are not limited to network-based trading platforms however. In other embodiments, other web service platforms, such as a social networking websites, news aggregating websites, web portals, network-based advertising platforms, or any other system that provide web services to users, may be employed. Furthermore, more than one platform may be supported by each persona management server module 120 and each platform may reside on a separate server machine 110 from the persona management server module 120.

The client machine 150 may host a persona management client module 160. In various embodiments, the persona management client 150 may be a web browser or a gadget application that operates in a background of the computing environment of the client machine 150 or a combination thereof. The client machine 150 may be configured to permit a user to access the various applications, resources, and capabilities of the web services via the persona management client module 160.

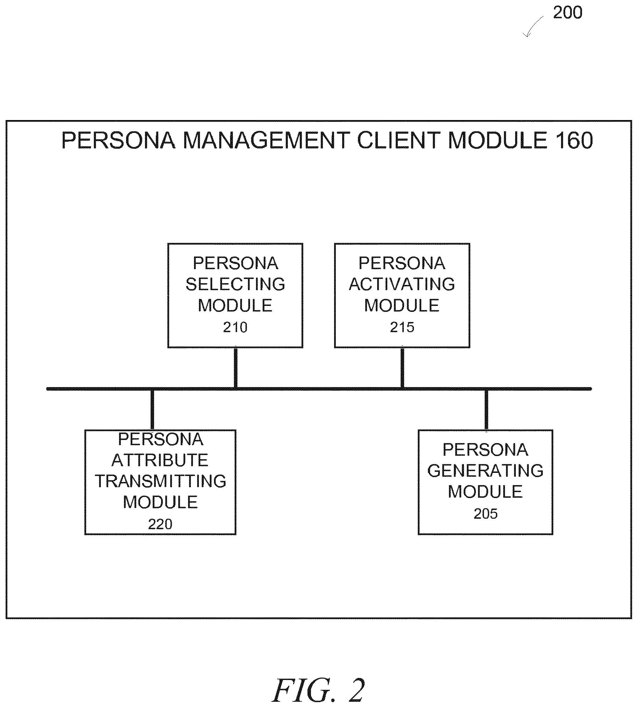

The client machine 150 may also comprise a display unit 170 that receives a selection of a persona from a plurality of personas 172 and 176 to access the web services represented in the form of service symbols 174. In various embodiments, the display unit 170 may comprise a touch screen device capable of capturing a user's finger or electronic movements thereon. More detailed explanations regarding the persona management client module 160, persona management server module 120 and the display unit 170 are provided below in detail with respect to FIGS. 2-5.

It is noted that while **FIG. 1** illustrates the client machine 150 and the server machine 110 in a client-server architecture, other embodiments are not limited to this architecture, and may equally find applications in a distributed, peer-to-peer, or standalone architectures.

**FIG. 2** shows a block diagram 200 illustrating the persona management client module 160, according to various embodiments. The persona management client module 160 may comprises a persona generating module 205, a persona selecting module 210, a persona activating module 215, and a persona attribute transmitting module 220.

In various embodiments, the persona generating module 205 may be configured to generate one or more personas of a user. Each persona of the one or more personas may comprise one or more attributes populated with at least one portion of user attribute information of the user, and indicate a unique identity of the user for a respective one or more of a plurality of web services provided by an associated server (e.g., the server machines 110). In various embodiments, the one or more attributes of the persona may comprise at least one of a name, an account name, a password, a secret question, a secret answer, a geo location, a product preference, a lifestyle attribute, an age or contact information of the user. In various embodiments, the one or more attributes of the persona may comprise geo location information of a user device (e.g., the client machine 150) corresponding to the user. For example, in one embodiment, the geo location information of the user device may be provided by a satellite-based geographic information system (GIS) external to the user device.

The persona may be associated with a persona symbol that may comprise at least one symbol. In various embodiments, referring back to **FIG. 1****,** the persona symbol 172 may comprise at least one of a letter, a number, an image, or an icon. For example, the symbol "$" may comprise the persona symbol of one persona of the user for an online payment service (e.g., PayPal). Similarly, the runner image, as shown in FIG. 1, may comprise the persona symbol of another persona of the user for a social networking service, such as Facebook (represented by the symbol "F') or Twitter (represented by the symbol "T").

In various embodiments, the persona symbol may comprise a finger gesture 176 or a voice (not shown). The finger gesture 176 may comprise finger or electronic pen movements that are indicative of at least one of the letter, the number or a geometric shape, such as a circle, a rectangle, a triangle, a star, etc. In one embodiment, the finger and/or pen movements may be captured by a touch screen device (e.g., the display unit 170).

In various embodiments, the persona generation module 205 may be configured to generate more than one persona for the same user for the same web service. For example, still referring to **FIG. 1****,** the symbol "B" may comprise the persona symbol associated with a buyer persona of the user for a respective service provided by eBay (represented by the symbol "E") while the symbol "S" may comprise the persona symbol associated with a seller persona of that user for the same service provided by eBay.

In various embodiments, each persona of the plurality of personas 172 of the user may comprise a different subset of the user attribute information as its persona attribute(s). This allows assigning different identities to the same user not only for different web services but also for a given web service.

In various embodiments, the persona generating module 205 may be configured to generate the one or more personas responsive to receiving a user request. In such a scenario, at least one of the above-described processes to generate the one or more personas, such as populating the one or more attributes of the persona with the at least one portion of user attributes, or associating the persona with the corresponding persona symbol, may be performed in response to one or more user inputs. Also, when generating the persona, the persona generating module 205 may receive a user selection of an existing symbol from a group of existing symbols displayed via a display (e.g., the display unit 170) to use the selected existing symbol as the persona symbol of the persona being generated. In various embodiments, the group of existing symbols may be stored in a local data storage (e.g., internal or external memory) associated with the client machine 150, the server machine 110, or a third party server.

In other embodiments, the persona generation module 205 may be configured to automatically generate the one or more personas responsive to receiving from a respective web service of the one or more web services (e.g., provided by the server machines 110) an indication that the user's activities related to the respective web service has reached a specified threshold. For example, in one embodiment, the persona generating module 205 may automatically generate the one or more personas when the number of specified user activities, such as bidding, purchasing, and/or adding comments to other users' listings, etc., with respect to the respective web service has reached the specified threshold (e.g., 5, 10 or 100 transactions) for a specified period of time (e.g., 1 week, 1 month or 1 year, etc.). In such a scenario, the persona generation module 205 may be configured, as a default, to assign already existing user attribute information and an existing symbol as the persona attributes and the persona symbol, respectively, and then to allow the user to change them to his or her interests.

Referring to **FIG. 2****,** in various embodiments, the persona selecting module 210 may receive a selection of a persona symbol of the user from a plurality of stored persona symbols (e.g., the persona symbols 172 displayed on the display unit 170). In one embodiment, as noted above, each persona symbol may comprise at least one symbol and correspond to a respective persona of a plurality of personas. As also noted above, each persona may indicate a unique identity of the user for a respective web service (e.g., the web services represented by the service symbols 174) and comprise one or more attributes populated with at least one portion of attribute information of the user.

For example, in various embodiments, referring to **FIG. 1****,** the selection may be indicated by the user's finger gesture (e.g., finger or electronic pen movements) dragging a corresponding persona symbol (e.g., the symbols "B" or "S") onto the service symbol (e.g., the symbol "E" representing web services provided by eBay).

In various embodiments, the persona symbols may be previously linked to a respective web service of the one or more web services when they are mapped to corresponding personas. In such a case, the selection of a persona may be indicated by the user's finger gesture (e.g., finger or electronic pen movements), drawing a certain geometric shape (e.g., circle 176), a letter, a number or a combination thereof. The persona selecting module 210 may be configured to capture such finger gestures via a touch screen device (e.g., the display unit 170). In various embodiments, the persona symbol may be selected via the user's voice describing the persona symbol. It is noted that the above-explained methods and other methods of selecting a persona symbol may be employed separately or combined together.

Referring to **FIG. 2****,** the persona activating module 215 may activate the persona that corresponds to the persona symbol being selected. In various embodiments, the persona activating module 215 may be configured to check an associated database to determine whether the symbol associated with the selection (e.g., the finger gesture or voice description of a circle captured via the touch screen device) matches a stored persona symbol in the database. Responsive to determining that there is a match between the persona symbol being selected and the stored persona symbol, the persona activating module 215 may activate the persona corresponding to the persona symbol being selected. Otherwise, the persona activating module 215 may present an error message via the display unit 170.

The persona attribute transmitting module 220 may then transmit at least one attribute of the one or more attributes of the persona being activated to the respective web service over a network (e.g., the network 140). In various embodiments, the persona attribute transmitting module 220 may be configured to automatically populate a web form provided by the respective web service with the at least one attribute. For example, in one embodiment, the web form may comprise at least one of a registration form, a login form or a message form. In yet another embodiment, the persona attribute transmitting module 220 may be configured to automatically send information indicative of a geographic location of the user device (e.g., the client machine 150) to the respective web service.

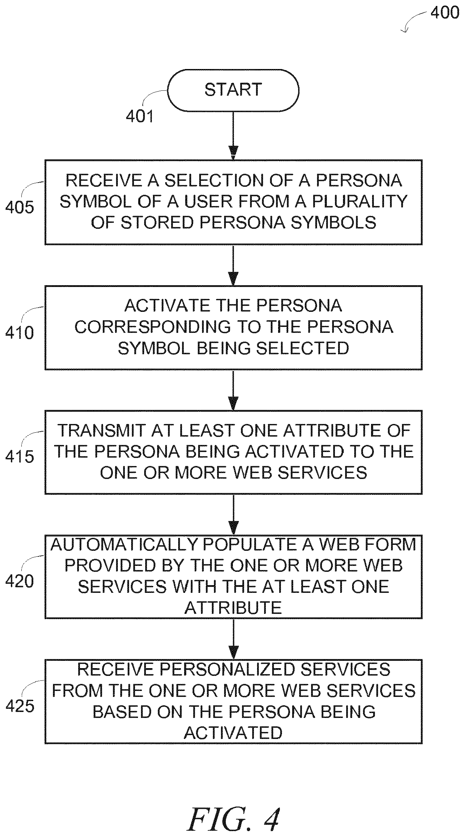

In various embodiments, for example, the persona management client module 160 may have application programming interfaces (APIs) for the one or more web services. By using these APIs, the persona attribute transmitting module 220 may be capable of determining contexts of each field (e.g., user id, password or preferred services field, etc.) to be filled in the web form, and populating the field with a corresponding attribute of the persona. More explanations regarding the functions of the persona management client module 160 are provided below with respect to **FIG. 4****.**

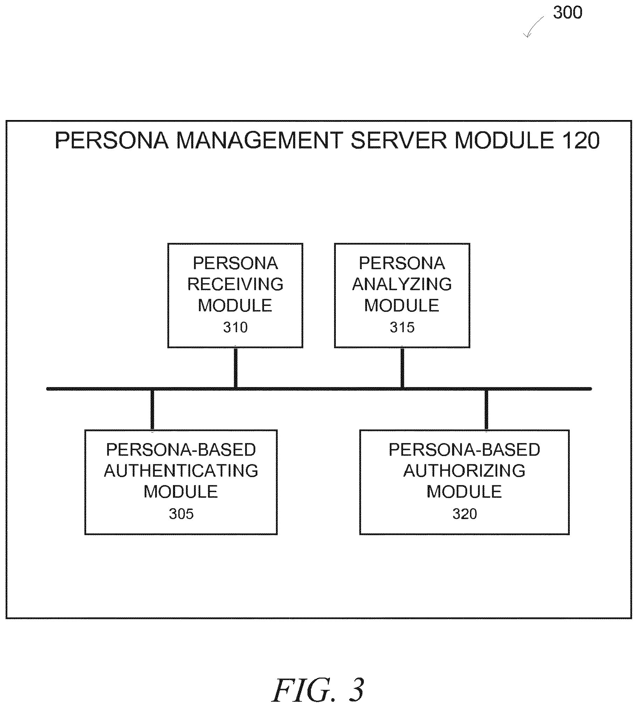

**FIG. 3** shows a block diagram illustrating the persona management server module 120, according to various embodiments. The persona management server module 120 may comprises a persona receiving module 310, a persona analyzing module 315, a persona-based authenticating module 305 and a persona-based authorizing module 320.

In various embodiments, referring to **FIG. 1****,** the persona receiving module 310 may be configured to receive, via a network (e.g., the network 140), an indication of activation of a persona on a user device (e.g., the client machine 150) corresponding to a user. For example, the persona may comprise one that corresponds to one of the plurality of persona symbols 172 and 174.

The persona analyzing module 315 may be configured to determine whether the persona indicated as being activated on the user device matches a stored persona in memory (not shown) associated with a server (e.g., the server machines 110) on which the persona analyzing module 315 may execute. In various embodiments, the indication may comprise the persona symbol that corresponds to the persona being activated, and the persona analyzing module 315 may be configured to compare the persona symbol included in the indication to a stored persona symbol in the memory associated with the server to authenticate the persona being activated.

The persona-based authenticating module 305 may be configured to automatically authenticate (e.g., log in) the user to a corresponding web service (e.g., services provided by eBay, Facebook or Twitter represented by the symbols "E", "F" and "T", respectively) to which the persona being activated on the user device is linked. In various embodiments, the authentication of the user may be based on determining that the persona being activated on the user device matches the stored persona without separately receiving the user's authentication information, such as login information (e.g., user id and password), from the user device.

In various embodiments, the indication of the activation of the persona may comprise at least a portion of the information regarding the user device itself, such as an IP (internet protocol) address and/or a phone number associated with the user device. Thus, in various embodiments, the indication of activation of the persona may not include a password or a user identification which may comprise textual information. In such a scenario, the persona-based authenticating module 205 may be configured to compare the user device information included in the indication with stored user device information corresponding to the stored persona to determine whether the persona being activated on the user device matches the stored persona. This allows one or more same persona symbols to be used for one or more users as long as the one or more users use different user devices.

Once the user is authenticated (e.g., logged in), for example, by the persona-based authenticating module 305 to the respective web service, the persona-based authorizing module 320 may authorize the user with a different level to provide a different set of personalized services to the user device based on the persona being activated on the user device. For example, in various embodiments, the persona-based authorizing module 320 may be configured to authorize the user for a first personalized service (e.g., a set of buyer functions) of the corresponding web service (e.g., eBay) based on determining that the persona being activated on the user device matches a first stored persona (e.g., buyer persona represented by the symbol "B"). Similarly, the persona-based authorizing module 320 may be also configured to authorize the user for a second personalized service (e.g., a set of seller functions) of the same web service (e.g., eBay) based on determining that the persona being activated on the user device matches a second stored persona (e.g., seller persona represented by the symbol "S"). This allows the web service to provide the user with a plurality of different identities each associated with a different personalized service (e.g., a set of functions) for the same web service.

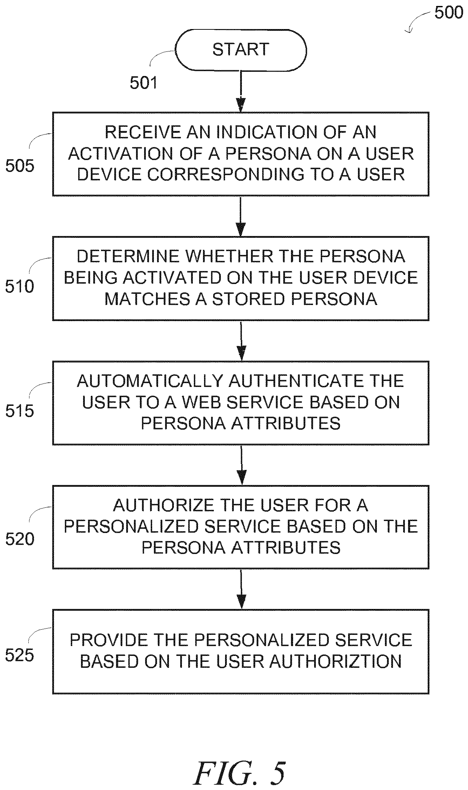

In various embodiments, the web service may be provided by the same server (e.g., the server machines 110) in which the persona management server module 120 runs. In yet other embodiments, the web service may be provided by a third party service provider. In such a scenario, the persona management server module 120 may be configured to operate as an authentication and authorization (AAA) server for the third party service provider, and the persona-based authorizing module 320 may be configured to receive at least one of the first and second personalized services of the web service from a different server (not shown) associated with the third party service provider. For example, APIs for the web service may be used by the persona-based authorizing module 320 to obtain the corresponding personalized service from the web service. More explanations regarding the functions of the persona management server module 120 are provided below with respect to FIG. 5.

Each of the modules described above with respect to FIGS. 1-3 may be implemented by hardware (e.g., circuit), firmware, software or any combinations thereof. Although each of the modules is described above as a separate module, the entire modules or some of the modules in FIGS. 1-3 may be implemented as a single entity (e.g., module or circuit) and still maintain the same functionality. Still further embodiments may be realized. Some of these may include a variety of methods. The system 100 and/or its component apparatus (e.g., 110 or 150) in FIGS. 1-3 may be used to implement, among other things, the processing associated with the methods 400 and 500 of FIGS. 4 and 5 discussed below.

**FIG. 4** shows a flow diagram illustrating a method 400 at a client (e.g., the client machine 150) for authenticating and/or authorizing a user for a web service using personas of the user, according to various embodiments. For example, in various embodiments, at least one portion of the method 400 may be performed by the persona management client module 160 of FIG. 1. The method 400 may commence at operation 401 and proceeds to operation 405, where a selection of a persona symbol of a user from a plurality of stored persona symbols may be received via a user device corresponding to a user (e.g., the client machine 150). Each persona symbol may comprise at least one symbol and correspond to a respective persona of a plurality of personas. Each persona may be configured to be indicative of a unique identity of the user for one or more web services and comprise one or more attributes. Each attribute of the persona may be populated with at least one portion of user attribute information of the user.

In various embodiments, the receiving of the selection of the persona symbol may comprise receiving an indication of a finger gesture that matches the persona symbol, or receiving an indication of the persona symbol moving to a position on a display of the user device. The finger gesture may be the users' finger or electronic pen movements and indicative of at least one of a letter, a number or a geometric shape. The position to which the persona symbol being selected is moved may be associated with a symbol that is indicative of the one or more web services.

At operation 410, the persona corresponding to the persona symbol being selected may be activated. In various embodiments, the activating of the persona may comprise comparing the finger gesture with a stored persona symbol. If it is determined that the finger gesture matches the stored persona symbol, then the persona symbol may be activated. Otherwise, if it is determined that the finger gesture does not match the stored persona symbol, then the persona symbol may be prevented from being activated.

At operation 415, at least one attribute of the one or more attributes of the persona being activated may be transmitted to the one or more web services over a network (e.g., the network 140).

At operation 420, in various embodiments, the transmitting of the at least one attribute of the persona may comprise automatically populating a web form provided by the one or more web services with the at least one attribute. In one embodiment, for example, the web form may comprise at least one of a registration form, a login form, a message form or any combination thereof. In other embodiments, the transmitting of the at least one attribute may comprise automatically sending information indicative of a geographic location of the user device to the one or more web services.

At operation 425, once the at least one attribute of the persona being activated has been successfully transmitted to the one or more web services, then services personalized based on the persona may be received from the one or more web services, and presented to the user, for example, via the display unit 170. In various embodiments, for example, the plurality of personas may comprise a first persona mapped to a first persona symbol, and a second persona mapped to a second persona symbol. In such a case, a first personalized service may be received from a respective web service of the one or more web services and presented to the user responsive to the first persona being activated, and a second personalized service may be received from the respective web service and presented to the user responsive to the second persona being activated.

In various embodiments, an authentication and/or authorization of the user may be performed by the one or more web services and/or a third party authentication and authorization service provider to automatically log in the user to the one or more web services, and to provide the user with personalized services based on his persona(s). More explanations regarding the automatic log in of the user, and provision of the personalized services based on personas are provided below with respect to **FIG. 5****.**

In various embodiments, the method 400 may further comprise generating the persona prior to the receiving of the indication of the selection of the persona. In one embodiment, the generating may comprise selecting the one or more attributes from a plurality of attributes to assign to the persona being generated and mapping the at least one symbol as the persona symbol. In one embodiment, the generating may be responsive to a specified event. For example, in one embodiment, the specified event may comprise at least one of receiving a user request to generate the persona or receiving an indication of user activities related to the one or more web services reaching a specified threshold.

In various embodiments, the generating of the persona may further comprise linking the persona symbol corresponding to the persona to the one or more web services. In one embodiment, the linking of the persona symbol to the one or more web services may comprise linking a first subset of the one or more attributes of the persona to a first web service of the one or more web services and linking a second subset of the one or more attributes to a second web service of the one or more web services. For example, information related to the user's hobby (e.g., marathon or running) may be included in a "runner" persona of the user (e.g., represented by the runner image in FIG. 1), and the runner persona symbol may be linked to a social network service, such as Facebook (e.g., represented by the service symbol "F" in FIG. 1), and not to an online transaction service, such as eBay (e.g., represented by the service symbol "E" in FIG. 1), and vice versa.

FIG. 5 shows a flow diagram illustrating a method 500 at a server (e.g., the server machines 110) for authenticating and/or authorizing a user for a web service using personas of the user, according to various embodiments. For example, in various embodiments, at least one portion of the method 500 may be performed by the persona management server module 120 of FIG. 1. The method 500 may commence at operation 501 and proceeds to operation 505, where a selection of a persona symbol of a user from a plurality of stored persona symbols may be received from a user device corresponding to the user (e.g., the client machine 150).

At operation 510, it may be determined that whether the persona being activated on the user device matches a stored persona in memory associated with the server.

At operation 515, the user may be automatically authenticated (e.g., logged in) to a corresponding web service of the one or more web services based on determining that the persona being activated on the user device matches the stored persona, without requiring any further user-provided (e.g., user-typed) information from the user device. For example, in various embodiments, the user may be automatically authenticated to the one or more web service based on secret attributes, such as a password, shared between the user device and the one or more web services.

At operation 520, the user (or the user device corresponding to the user) may be authorized for one or more personalized services (or functions) of the corresponding web service based on one or more persona attributes of the persona being activated and/or the user authentication. For example, in various embodiments, the user (or the device corresponding to the user) may be authorized for a first personalized service of the corresponding web service based on determining that the persona being activated matches a first stored persona. Similarly, the user (or the device corresponding to the user) may be authorized for a second personalized service of the corresponding web service based on determining that the persona matches a second stored persona.

At operation 525, the one or more personalized services may be provided to the user (or the device corresponding to the user), directly by the corresponding web service or via a third party service provider, based on the user authorization and/or authentication. In various embodiments, the one or more personalized services may be provided based on one or more user authentication/authorization policies stored, for example, in a (local or remote) storage device accessible to the persona management server module 120.

The methods 400 and/or 500 may be performed by processing logic that may comprise hardware (e.g., dedicated logic, programmable logic, microcode, etc.), such as at least one processor, software (such as run on a general purpose computing system or a dedicated machine), firmware, or any combination of these. It is noted that although the methods 400 and 500 are explained above with respect to the server machines 110 and/or client machine 150 in FIG. 1 for convenient understanding, those skilled in the art will recognize that the methods 400 and 500 may be performed by other systems and/or devices that provide substantially the same functionalities as the server machines 110 and/or client machine 150.

Although only some activities are described with respect to FIGS. 4 and 5, the methods 400 and 500 according to various embodiments may perform other activities, such as operations performed by the display unit 170 in FIG. 1 and/or an API (not shown) located in the server machines 110 or client machine 150 in FIG. 1, in addition to and/or in alternative to the activities described with respect to FIGs. 4 and 5.

The methods 400 and 500 described herein do not have to be executed in the order described, or in any particular order. Moreover, various activities described with respect to the methods 400 and 500 identified herein may be executed in repetitive, serial, heuristic, parallel fashion or any combinations thereof. The individual activities of the methods 400 and 500 shown in FIGS. 4 and 5 may also be combined with each other and/or substituted, one for another, in various ways. Information, including parameters, commands, operands, and other data, may be sent and received between corresponding modules or elements in the form of one or more carrier waves. Thus, many other embodiments may be realized.

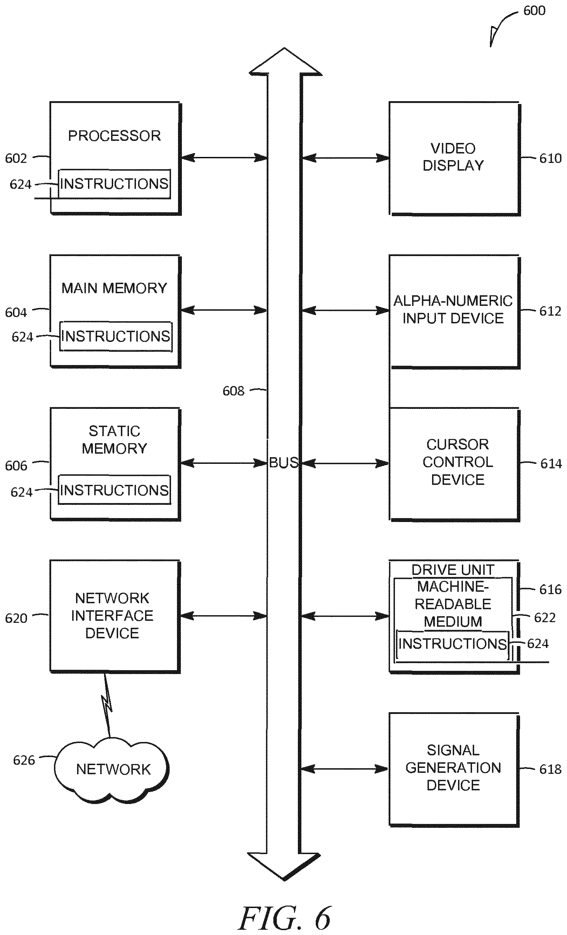

In various embodiments, the methods 400 and 500 shown in FIGS. 4 and 5 may be implemented in various devices, as well as in a machine-readable medium, such as a storage device, where the methods 400 and 500 are adapted to be executed by one or more processors. Further details of such embodiments are described below with respect to FIG. 6.

**FIG. 6** is a diagrammatic representation of a machine (e.g., the server machines 110 or the client machines 150) in the example form of a computer system 600, according to various embodiments within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a server computer, a client computer, a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU) a graphics processing unit (GPU) or both), a main memory 604 and a static memory 606, which communicate with each other via a bus 608. The computer system 600 may further include a video display unit 610 (e.g., a liquid crystal display (LCD) or a cathode ray tube (CRT)). The computer system 600 also includes an alphanumeric input device 612 (e.g., a keyboard), a cursor control device 614 (e.g., a mouse), a disk drive unit 616, a signal generation device 618 (e.g., a speaker) and a network interface device 620.

The disk drive unit 616 includes a machine-readable medium 622 on which is stored one or more sets of instructions 624 (e.g., software) embodying any one or more of the methodologies or functions described herein. The software 624 may also reside, completely or at least partially, within the main memory 604 and/or within the processor 602 during execution thereof by the computer system 600, the main memory 604 and the processor 602 also constituting machine-readable media. The software 624 may further be transmitted or received over a network 626 via the network interface device 620.

While the machine-readable medium 622 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. The term "machine-readable medium" shall accordingly be taken to include, but not be limited to, solid-state memories, optical media, and magnetic media.

Thus, method and system for authenticating and authorizing a user for web services using personas of the user were described. Although the present invention has been described with reference to specific example embodiments, it will be evident that various modifications and changes may be made to these embodiments without departing from the broader scope of the invention. The various modules discussed may be implemented in hardware, software, or a combination of these. Accordingly, the specification and drawings are to be regarded in an illustrative rather than a restrictive sense.

According to various embodiments, users can use finger gesture on a touch screen based on image identifications, or voice activations based on key words to perform actions (e.g., signing-in, registering or sending a message) that are conventionally cumbersome because of, for example, memorizing and typing of user information (e.g., user IDs and passwords), especially when a user device provides a small size screen and thus small size forms. The user may choose an identity attached to the persona being activated to perform certain transactions, such as buying (e.g., as a stamp collector or an antique collector), selling (e.g., as a golf equipment seller or used book seller), bidding, shipping, or coupon redemption, etc. Enhanced user experience may result.

Also, the user may have enhanced flexibility in determining whether certain user information will be shared with the web service or not. For example, the user may prevent the geographic location information of his user device from being exposed to the web service when interacting with the web service once it is determined that the web service does not require such geo-location information. Furthermore, when interacting with persona aware web services, the user may not need to use conventional (e.g., textual) user IDs or passwords to get services from the persona aware web services. Instead, by simply logging in using personas that may not require the user IDs or passwords, the user may get personalized services based on his or her personas being activated. Enhanced protection of user privacy and security information may result.

Web services that support persona-based user login may provide different personalized services to the user based on the activated user persona with reduced duplicate user account information. The user who wants to to access a given web service with different roles (e.g., as a stamp collector or an old book seller), the user may not need to register multiple times, creating multiple accounts, to get corresponding services from the given web service. In such a scenario, the given web service may associate only one or more additional attributes with each of a plurality of the user, and thus provide the personalized services to the user based on the user's persona being activated without having to manage all different user accounts for the user. Also, since each user account can be linked to multiple personas, the web service can provide the user with only relevant messages, such as based on opt-in options, with respect to a relative persona via his mobile device. Enhanced customer engagement and conversions may result, allowing improved target marketing.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method at a user device (150) of authenticating and authorizing a user for one or more web services, the method comprising:
generating and storing a plurality of personas, each persona indicative of a unique identity of a user for one or more web services and comprising one or more attributes populated with at least one portion of user attribute information and a URL for the one or more web services, the one or more attributes comprising user authentication information for the one or more web services;
storing a persona symbol comprising at least one symbol mapped to each respective persona of the plurality of personas;
receiving (405) a selection of a persona symbol from the plurality of stored persona symbols for the plurality of personas, wherein the receiving (405) comprises receiving an indication of a gesture that matches the persona symbol or receiving an indication of the persona symbol moving to a position on a display (170) of the user device (150), the gesture indicative of at least one of a letter, a number or a geometric shape, and the position corresponding to a symbol indicative of the one or more web services;
activating (410) the persona corresponding to the selected persona symbol; and
transmitting (415) at least one attribute of the one or more attributes of the persona being activated to the web service over a network (140) for the authentication and authorization of the user for the one or more web services.

2. The method of claim 1, wherein the activating (410) comprises:
comparing the gesture with a stored persona symbol;
activating the persona symbol based on determining that the gesture matches the stored persona symbol; and
refraining from activating the persona symbol based on determining that the gesture does not match the stored persona symbol.

3. The method of claim 1, wherein the transmitting (415) comprises:
automatically populating (420) a web form provided by the web service with the at least one attribute, the web form comprising at least one of a registration form, a login form or a message form; or
automatically sending information indicative of a geographic location of the user device (150) to the one or more web services.

4. The method of claim 1, wherein the generating of each persona is in response to a specified event, the generating comprising selecting the one or more attributes from a plurality of attributes to assign to the persona being generated.

5. The method of claim 4, wherein the generating further comprises:
linking the persona symbol to the one or more web services.

6. The method of claim 5, wherein the linking comprises:
linking a first subset of the one or more attributes to a first web service of the one or more web services; and
linking a second subset of the one more attributes to a second web service of the one or more web services.

7. The method of claim 1, wherein the plurality of personas comprises a first persona and a second persona, the method further comprising:
receiving a first personalized service from a respective web service of the one or more web services responsive to the first persona being activated; and
receiving a second personalized service from the respective web service responsive to the second persona being activated.

8. A user device (150) for authenticating and authorizing a user for one or more web services, the user device (150) comprising:
one or more processors to execute a persona management module (160), the persona management module (160) configured to carry out the method of any preceding claim.

9. A machine-readable medium carrying machine readable instructions, which when executed by one or more processors of the machine, causes the machine to carry out the method of any one of claims 1 to 7.

## Patentansprüche

1. Ein Verfahren an einer Benutzervorrichtung (150) zum Authentifizieren und Autorisieren eines Benutzers für einen oder mehrere Webservices, wobei das Verfahren Folgendes beinhaltet:
Erzeugen und Speichern einer Vielzahl von Personas, wobei jede Persona eine eindeutige Identität eines Benutzers für einen oder mehrere Webservices bezeichnet und ein oder mehrere Attribute beinhaltet, die mit mindestens einem Teil von Benutzerattributinformationen und einer URL für den einen oder die mehreren Webservices befüllt sind, wobei das eine oder die mehreren Attribute Benutzerauthentifizierungsinformationen für den einen oder die mehreren Webservices beinhalten;
Speichern eines Personasymbols, das mindestens ein Symbol beinhaltet, das jeder entsprechenden Persona der Vielzahl von Personas zugeordnet ist;
Empfangen (405) einer Auswahl eines Personasymbols aus der Vielzahl von gespeicherten Personasymbolen für die Vielzahl von Personas, wobei das Empfangen (405) das Empfangen eines Hinweises auf eine Geste, die mit dem Personasymbol übereinstimmt, oder das Empfangen eines Hinweises, dass das Personasymbol an eine Position auf einer Anzeige (170) der Benutzervorrichtung (150) verschoben wird, beinhaltet, wobei die Geste mindestens eines von einem Buchstaben, einer Zahl oder
einer geometrischen Form bezeichnet und die Position einem Symbol zugehörig ist, das den einen oder die mehreren Webservices bezeichnet;
Aktivieren (410) der Persona, die dem ausgewählten Personasymbol zugehörig ist; und Übertragen (415) mindestens eines Attributs des einen oder der mehreren Attribute der Persona, die aktiviert wird, an den Webservice über ein Netzwerk (140) für die Authentifizierung und Autorisierung des Benutzers für den einen oder die mehreren Webservices.

2. Verfahren gemäß Anspruch 1, wobei das Aktivieren (410) Folgendes beinhaltet:
Vergleichen der Geste mit einem gespeicherten Personasymbol;
Aktivieren des Personasymbols basierend auf dem Bestimmen, dass die Geste mit dem gespeicherten Personasymbol übereinstimmt; und
Unterlassen des Aktivierens des Personasymbols basierend auf dem Bestimmen, dass die Geste nicht mit dem gespeicherten Personasymbol übereinstimmt.

3. Verfahren gemäß Anspruch 1, wobei das Übertragen (415) Folgendes beinhaltet:
automatisches Befüllen (420) eines von dem Webservice bereitgestellten Webformulars mit dem mindestens einen Attribut, wobei das Webformular mindestens eines von einem Registrierungsformular, einem Login-Formular oder einem Nachrichtenformular beinhaltet; oder
automatisches Senden von Informationen, die einen geographischen Standort der Benutzervorrichtung (150) bezeichnen, an den einen oder die mehreren Webservices.

4. Verfahren gemäß Anspruch 1, wobei das Erzeugen jeder Persona als Reaktion auf ein spezifiziertes Ereignis erfolgt, wobei das Erzeugen das Auswählen des einen oder der mehreren Attribute aus einer Vielzahl von Attributen beinhaltet, um es der Persona, die erzeugt wird, zuzuweisen.

5. Verfahren gemäß Anspruch 4, wobei das Erzeugen ferner Folgendes beinhaltet:
Verknüpfen des Personasymbols mit dem einen oder den mehreren Webservices.

6. Verfahren gemäß Anspruch 5, wobei das Verknüpfen Folgendes beinhaltet:
Verknüpfen einer ersten Teilmenge des einen oder der mehreren Attribute mit einem ersten Webservice des einen oder der mehreren Webservices; und
Verknüpfen einer zweiten Teilmenge des einen oder der mehreren Attribute mit einem zweiten Webservice des einen oder der mehreren Webservices.

7. Verfahren gemäß Anspruch 1, wobei die Vielzahl von Personas eine erste Persona und eine zweite Persona beinhaltet, wobei das Verfahren ferner Folgendes beinhaltet:
Empfangen eines ersten personalisierten Services von einem entsprechenden Webservice des einen oder der mehreren Webservices als Reaktion auf das Aktivieren der ersten Persona; und
Empfangen eines zweiten personalisierten Services von dem entsprechenden Webservice als Reaktion auf das Aktivieren der zweiten Persona.

8. Eine Benutzervorrichtung (150) zum Authentifizieren und Autorisieren eines Benutzers für einen oder mehrere Webservices, wobei die Benutzervorrichtung (150) Folgendes beinhaltet:
einen oder mehrere Prozessoren zum Ausführen eines Personamanagementmoduls (160), wobei das Personamanagementmodul (160) konfiguriert ist, um das Verfahren gemäß einem der vorhergehenden Ansprüche durchzuführen.

9. Ein maschinenlesbares Medium, das maschinenlesbare Anweisungen trägt, die bei Ausführung durch einen oder mehrere Prozessoren der Maschine bewirken, dass die Maschine das Verfahren gemäß einem der Ansprüche 1 bis 7 durchführt.

## Revendications

1. Un procédé au niveau d'un dispositif utilisateur (150) d'authentification et d'autorisation d'un utilisateur pour un ou plusieurs services web, le procédé comprenant :
la génération et le stockage d'une pluralité de personas, chaque persona étant indicatif d'une identité unique d'un utilisateur pour un ou plusieurs services web et comprenant un ou plusieurs attributs remplis avec au moins une partie d'informations d'attributs utilisateur et une URL pour les un ou plusieurs services web, les un ou plusieurs attributs comprenant des informations d'authentification d'utilisateur pour les un ou plusieurs services web ;
le stockage d'un symbole de persona comprenant au moins un symbole mappé sur chaque persona respectif de la pluralité de personas ;
la réception (405) d'une sélection d'un symbole de persona parmi la pluralité de symboles de persona stockés pour la pluralité de personas, où la réception (405) comprend la réception d'une indication d'un geste qui correspond au symbole de persona ou la réception d'une indication du fait que le symbole de persona se déplace jusqu'à une position sur un affichage (170) du dispositif utilisateur (150), le geste étant indicatif d'au moins un élément parmi une lettre, un nombre ou une forme géométrique, et la position correspondant à un symbole indicatif des un ou plusieurs services web ;
l'activation (410) du persona correspondant au symbole de persona sélectionné ; et
la transmission (415) d'au moins un attribut des un ou plusieurs attributs du persona qui est activé au service web sur un réseau (140) pour l'authentification et l'autorisation de l'utilisateur pour les un ou plusieurs services web.

2. Le procédé de la revendication 1, où l'activation (410) comprend :
la comparaison du geste avec un symbole de persona stocké ;
l'activation du symbole de persona sur la base de la détermination du fait que le geste correspond au symbole de persona stocké ; et
le fait de s'abstenir d'activer le symbole de persona sur la base de la détermination du fait que le geste ne correspond pas au symbole de persona stocké.

3. Le procédé de la revendication 1, où la transmission (415) comprend :
le remplissage (420) automatique d'un formulaire web fourni par le service web avec l'au moins un attribut, le formulaire web comprenant au moins un élément parmi un formulaire d'enregistrement, un formulaire d'ouverture de session ou un formulaire de message ; ou
l'envoi automatique d'informations indicatives d'un emplacement géographique du dispositif utilisateur (150) à destination des un ou plusieurs services web.

4. Le procédé de la revendication 1, où la génération de chaque persona a lieu en réponse à un événement spécifié, la génération comprenant la sélection des un ou plusieurs attributs parmi une pluralité d'attributs à assigner au persona qui est généré.

5. Le procédé de la revendication 4, où la génération comprend en outre :
le reliage du symbole de persona aux un ou plusieurs services web.

6. Le procédé de la revendication 5, où le reliage comprend :
le reliage d'un premier sous-ensemble des un ou plusieurs attributs à un premier service web des un ou plusieurs services web ; et
le reliage d'un deuxième sous-ensemble des un ou plusieurs attributs à un deuxième service web des un ou plusieurs services web.

7. Le procédé de la revendication 1, où la pluralité de personas comprend un premier persona et un deuxième persona, le procédé comprenant en outre :
la réception d'un premier service personnalisé de la part d'un service web respectif des un ou plusieurs services web en réponse au fait que le premier persona est activé ; et
la réception d'un deuxième service personnalisé de la part du service web respectif en réponse au fait que le deuxième persona est activé.

8. Un dispositif utilisateur (150) pour une authentification et une autorisation d'un utilisateur pour un ou plusieurs services web, le dispositif utilisateur (150) comprenant :
un ou plusieurs processeurs afin d'exécuter un module de gestion de personas (160), le module de gestion de personas (160) étant configuré pour mettre en oeuvre le procédé de n'importe quelle revendication précédente.

9. Un support lisible par machine portant des instructions lisibles par machine qui, lorsque celles-ci sont exécutées par un ou plusieurs processeurs de la machine, amène la machine à mettre en oeuvre le procédé de n'importe laquelle des revendications 1 à 7.
